# FASCICULE DE BREVET EUROPEEN

(11) **EP 3 286 064 B1**
(45) Date de publication et mention de la délivrance du brevet: **12.02.2020**
(21) Numéro de dépôt: 16717296.4
(22) Date de dépôt: 07.04.2016
(51) Int. Cl.: B62B 7/08, B62B 7/04, B62B 7/06

(54) **CHÂSSIS PLIANT DE POUSSETTE POUR ENFANT, ET POUSSETTE CORRESPONDANTE**
KLAPPRAHMEN EINES KINDERWAGENS UND ZUGEHÖRIGER KINDERWAGEN
FOLDING FRAME OF A CHILD STROLLER, AND CORRESPONDING STROLLER

(30) Priorité: 22.04.2015 FR 1553603
(43) Date de publication de la demande: 28.02.2018
(73) Titulaire: Dorel France, 49309 Cholet Cedex (FR)
(72) Inventeur: BONDU, Gilles, 49100 Angers (FR); BRIAND, Yannis, 35000 Rennes (FR); WU, Tse-Chien, Kaohsiung City 800 (TW); WEI-YEH, Li, Tainan City 700 (TW)
(74) Mandataire: Vidon Brevets & Stratégie
(86) Numéro de dépôt international: PCT/EP2016/057663
(87) Numéro de publication internationale: WO 2016/169779

(56) Documents cités:
- EP-A1- 2 243 683
- WO-A1-2007/099121
- WO-A1-2008/006256
- FR-A1- 2 989 661
- US-A- 5 558 357
- US-A1- 2011 241 315

## Description

### 1. Domaine de l'invention

Le domaine de l'invention est celui de la puériculture. Plus précisément, l'invention concerne les poussettes, ou voitures d'enfant, et en particulier les mécanismes de pliage pour le châssis de telles poussettes.

### 2. L'art antérieur

On connaît déjà de nombreuses techniques de pliage de châssis de poussette.

D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations avec un nombre réduit d'opérations, et chacune de ces opérations devant être le plus facile possible ;
- sécurité de l'enfant transporté et notamment contrôle du pliage (pour lutter contre un pliage non souhaité, en particulier en présence d'un enfant) ;
- simplicité et faible coût de la fabrication.

Il est en outre souhaitable, bien sûr, qu'en position dépliée, la poussette soit confortable et sûre pour l'enfant.

On connaît par exemple les poussettes à pliage canne consistant à plier vers l'avant les poussoirs sur le brancard avant de la poussette. Ces poussettes ont notamment l'inconvénient de présenter un certain encombrement en longueur une fois pliées.

On connaît également les poussettes dites à pliage parapluie (du fait qu'elles s'inspirent du principe des baleines d'un parapluie), dont le principe est par exemple présenté dans le document de brevet US-3 936 069. Cette poussette comprend une poutre principale sensiblement verticale dont l'extrémité supérieure est solidaire d'un guidon et l'extrémité inférieure porte un élément d'articulation, sur lequel sont articulés des piétements. Le pliage des piétements s'effectue en appuyant sur le guidon, ce qui a pour effet d'entraîner la poutre principale et l'élément d'articulation vers le bas. Les piètements se rapprochent alors de la poutre principale par la présence de biellettes reliant d'un côté les piètements et de l'autre l'élément d'articulation. Le déploiement des piétements est obtenu par la manipulation inverse. Les inconvénients de ces pliages de type parapluie sont notamment un encombrement restant important en position pliée, et un déplacement peu aisé, toujours en position pliée, du fait que les roues ne sont plus parallèles.

On connaît encore certaines poussettes à trois roues dont le principe de pliage est notamment présenté dans le document de brevet EP-1 466 810. Cette poussette comprend, dans un mode de réalisation particulier illustré sur les figures 5A à 10B, deux montants supérieurs, reliés à leur première extrémité à un guidon, ou barre. La deuxième extrémité de ces montants est solidaire d'un montant inférieur s'étendant depuis les montants avant vers les deux blocs de roues arrière en formant sensiblement un « X », le centre du « X » étant un nœud central d'articulation de la poussette. Le bloc de la roue avant est porté par une poutre centrale qui porte également le nœud central d'articulation. Le pliage de la poussette est obtenu par le pivotement, vers le bas, des montants avant entrainant ainsi le coulissement vers la roue avant du nœud central d'articulation sur la poutre centrale. Le déplacement du nœud provoque l'inclinaison des montants inférieurs vers l'avant de la poussette. Le dépliage de la poussette est obtenu en tirant vers le haut les montants avant.

Le principe de pliage de cette poussette est intéressant. Toutefois, la compacité de la poussette en position pliée, n'est pas optimale. En effet, au cours du pliage, les roues arrière restent à égale distance l'une de l'autre. En outre, les montants avant occupent un espace relativement important une fois la poussette pliée.

Une technique permettant de rapprocher les roues arrière l'une de l'autre est décrite dans le document de brevet FR-2 989 661. Selon cette approche, une pièce est montée coulissante sur la poutre centrale, et son déplacement permet de contrôler le rapprochement, et respectivement l'éloignement, des roues arrière. Cependant, cette solution est peu aisée à mettre en œuvre en pratique.

Il existe, par conséquent, un besoin d'amélioration du pliage d'une telle poussette.

### 3. Objectifs de l'invention

L'invention a notamment pour objectif de pallier ces inconvénients de l'art antérieur.

Plus précisément, un objectif de l'invention est, selon au moins un mode de réalisation, de fournir un châssis de poussette dont le pliage est simple et efficace, en termes de compacité et de simplicité d'utilisation.

Ainsi, un objectif de l'invention est de fournir, selon au moins un mode de réalisation, un châssis de poussette qui offre une bonne compacité en position pliée, permettant notamment un transport et un rangement aisés.

Encore un autre objectif de l'invention est, selon au moins un mode de réalisation, de fournir un châssis de poussette assurant un pliage et/ou un dépliage simples, rapides, ergonomiques, et qui réduisent et simplifient les manipulations nécessaires (tout en assurant la sécurité de l'enfant transporté).

L'invention a également pour objectif, selon au moins un mode de réalisation, de fournir un mécanisme de pliage qui soit simple à mettre en œuvre et robuste.

### 4. Caractéristiques essentielles de l'invention

Ces objectifs, ainsi que d'autres qui apparaîtront plus clairement par la suite, sont atteints à l'aide d'un châssis pliant de poussette pour enfant, comprenant une partie supérieure présentant des moyens de réception d'une assise et des moyens de guidage de la poussette et une partie inférieure présentant une poutre centrale portant deux supports de roues arrière, reliés chacun à la poutre centrale par un ensemble de deux bras parallèles, articulés sur la poutre centrale.

Selon l'invention, la partie supérieure présente au moins un élément mobile en rotation autour d'un axe de rotation fixe par rapport à la poutre centrale, agissant sur au moins un des bras de chaque ensemble, via un mécanisme de transmission, de façon à rapprocher les supports de roue de la poutre centrale, pour prendre une position pliée et/ou à éloigner les supports de roue de la poutre centrale, pour prendre une position dépliée.

Ainsi, une poussette selon l'invention permet, grâce à son châssis particulier, un pliage optimal de la poussette en rapprochant les supports de roues arrière l'un vers l'autre (selon au moins deux directions). En effet, lors du pliage de la poussette, le châssis de l'invention permet de rapprocher les supports de roues arrière vers l'intérieur de la poussette, c'est-à-dire vers la poutre centrale. Le châssis de l'invention permet également de rapprocher les supports de roues arrière vers l'avant de la poussette, c'est-à-dire vers la ou les roues avant de la poussette.

Il est important de noter que, bien que l'entraxe entre les roues arrière varie, la partie supérieure du châssis conserve une largeur constante, en particulier au niveau de l'entraxe entre les moyens de réception de l'assise. Il n'est donc pas nécessaire de retirer le dispositif d'assise ni d'agir sur celui-ci, qui n'a pas besoin d'être pliable non plus.

L'invention suppose une transmission, telle que la mise en œuvre de plusieurs articulations, permettant le rapprochement/éloignement des supports de roues arrière de la poutre centrale à partir d'une rotation d'un élément de la portion supérieure autour d'un axe fixe par rapport à la poutre centrale. Ce type de liaison s'avère être plus fiable et robuste que les liaisons de type coulissement mises en œuvre dans l'art antérieur.

Selon un aspect particulier de l'invention, ledit au moins un élément mobile en rotation est articulé audit moyens de guidage, le déplacement de pliage et/ou de dépliage de ces derniers entraînant la rotation du ou desdits éléments mobiles en rotation.

Ainsi, le pliage/dépliage du châssis de la poussette est contrôlé par les moyens de guidage de la poussette. Lorsque les moyens de guidage sont déplacés vers le bas, c'est-à-dire vers la poutre centrale, ils entrainent en rotation l'élément mobile qui engendre ensuite le rapprochement des supports de roues vers la poutre centrale. Réciproquement, un déplacement des moyens de guidage vers le haut entraine l'éloignement des supports de roues arrière de la poutre par la rotation de l'élément mobile.

Selon l'invention, ladite partie supérieure comprend deux arceaux avant et arrière solidaires de ladite poutre centrale qui restent sensiblement parallèles entre eux dans les positions pliée et dépliée du châssis, ledit arceau avant formant ledit élément mobile en rotation.

Selon un aspect particulier de l'invention, lesdits bras des supports de roues arrière s'étendent depuis la poutre centrale vers l'arrière du châssis en position dépliée, et de la poutre centrale vers l'avant du châssis en position pliée.

Ainsi, en position pliée de la poussette, les bras des supports de roues arrière sont rapprochés de l'avant de la poussette, c'est-à-dire de la ou des roues avant, de manière à optimiser la compacité de la poussette. Un tel aspect permet un rangement et un transport plus aisé de la poussette en position pliée. En position dépliée de la poussette, c'est-à-dire en position d'utilisation, les bras des supports sont éloignés de la poutre centrale de manière à fournir une stabilité plus importante de la poussette.

Dans un mode de réalisation particulier de l'invention, le mécanisme de transmission comprend et/ou coopère avec au moins un élément d'assistance au pliage du châssis agissant sur ledit élément mobile en rotation et/ou sur un élément coulissant par rapport à ladite poutre centrale.

Ainsi, le pliage et le dépliage de la poussette sont facilités par la mise en œuvre d'un élément d'assistance au sein du châssis. En effet, l'action de cet élément permet de minimiser les efforts pour l'utilisateur puisque la force stockée dans cet élément en position dépliée est restituée lors du pliage de la poussette, et réciproquement. L'élément d'assistance peut se présenter sous la forme d'un ressort ou d'un vérin, par exemple.

Selon une mise en œuvre particulière de ce mode de réalisation, au moins un desdits bras, dit premier bras, est de longueur variable.

Plus particulièrement, ledit premier bras est constitué de deux éléments aptes à coulisser l'un par rapport à l'autre, le pliage et/ou le dépliage de la partie supérieure du châssis entraînant le coulissement des deux éléments l'un par rapport à l'autre.

Ainsi, la variation de la longueur du premier bras des supports de roues arrière permet de maintenir les deux bras, de chacun des supports de roues, parallèles en position pliée et dépliée et lors du passage entre ces deux positions. Les bras forment donc un parallélogramme avec les supports de roues arrière et la poutre centrale permettant ainsi de maintenir les roues arrière parallèles entre elles et par rapport à la poutre centrale quelque soit la position de la poussette. Un tel aspect permet un transport aisé de la poussette en position pliée puisque les roues arrière restent dans le même axe que la poutre centrale.

Selon un aspect particulier de ce mode de réalisation, le mécanisme de pliage comprend un élément coulissant solidaire d'au moins un desdits éléments dudit premier bras.

La mise en œuvre d'un tel élément coulissant permet la transmission du mouvement engendré par l'élément d'assistance au pliage notamment, sur les bras des supports de roues. Ainsi lors du pliage, l'élément coulissant agit sur un élément de chacun des premiers bras de manière à obtenir le rapprochement des supports de roues arrière vers la poutre centrale. Lors du dépliage, l'élément coulissant permet l'éloignement des supports de roues arrière de la poutre centrale en agissant sur ledit élément de chacun des premiers bras.

Selon un autre aspect particulier, le châssis comprend une bielle intermédiaire reliant ledit élément coulissant et ledit élément mobile en rotation.

La mise en œuvre de cette bielle intermédiaire permet la synchronisation du mouvement de l'élément mobile en rotation avec le déplacement de l'élément d'assistance au pliage et donc de l'élément coulissant. Ainsi, une simple action de l'utilisateur sur les moyens de guidage déclenche la rotation de l'élément mobile qui engendre le déplacement de l'élément coulissant avec l'aide de l'élément d'assistance au pliage pour obtenir le pliage ou le dépliage de la poussette.

Selon une mise en œuvre particulière de ce mode de réalisation, ledit élément coulissant présente une forme générale de T, dont la barre horizontale porte deux premiers pions autour desquels pivotent respectivement les bras et la barre verticale présente une lumière oblongue dans laquelle se déplace un deuxième pion fixe par rapport à ladite poutre centrale.

Ainsi, l'élément coulissant est apte, par le biais de la barre horizontale du T, à être solidarisé à chacun des premiers bras de longueur variable des supports de roues arrière afin de fournir un déplacement identique à chacun d'entre eux. Cela permet alors un pliage/dépliage homogène des supports de roues arrière de la poussette.

On comprend ici que l'élément coulissant pourrait prendre une autre forme permettant une solidarisation des deux bras et un déplacement identique de ces derniers. Par exemple, l'élément coulissant pourrait être en forme de Y.

Dans un autre mode de réalisation de l'invention, lesdits moyens de transmission comprennent une biellette dont l'axe longitudinal n'est pas parallèle avec l'axe longitudinal de ladite poutre centrale.

Ainsi, la configuration particulière de la biellette permet un rapprochement des supports de roues arrière vers l'avant et l'intérieur de la poussette. Aussi, le déplacement des supports des roues arrière est obtenu vers le haut de la poussette. En d'autres termes, une telle configuration de la biellette permet un rapprochement des blocs de roues arrière selon trois axes de manière à optimiser la compacité de la poussette dans sa position pliée.

Selon un aspect particulier de ce mode de réalisation, ladite biellette s'étend entre un desdits bras et une pièce mobile en rotation autour d'un axe perpendiculaire à ladite poutre centrale, dont le déplacement est contrôlé par ledit élément mobile en rotation.

La mise en œuvre d'une telle biellette coopérant avec une telle pièce mobile en rotation permet au châssis de ne mettre en œuvre que des liaisons de type pivot/articulation garantissant ainsi une fiabilité et une robustesse optimale lors du pliage/dépliage de la poussette.

Selon un autre aspect particulier de ce mode de réalisation, l'axe longitudinal de ladite biellette définit un premier angle avec le plan transversal de ladite poutre centrale compris entre 15 et 50°.

Selon encore un autre aspect particulier de ce mode de réalisation l'axe longitudinal de ladite biellette définit un deuxième angle avec le plan longitudinal de ladite poutre centrale compris entre 20 et 65°.

La mise en œuvre d'une biellette adoptant des tels angles par rapport à la poutre centrale permet une compacité optimale de la poussette en position pliée. En effet, la biellette, dans cette configuration, permet de rapprocher les supports de roues arrière selon trois axes, à savoir : vers l'avant de la poussette, vers l'intérieur de la poussette et vers le haut de la poussette. En d'autres termes, une telle biellette permet de rapprocher les supports de roues arrière vers la poutre centrale de manière à diminuer l'encombrement de la poussette en position pliée.

Enfin, l'invention concerne une poussette pour enfant comprenant un châssis pliant comme décrit précédemment et équipée d'au moins un dispositif de transport d'enfant monté sur la partie supérieure du châssis, tel qu'un hamac.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- les figures 1 et 2 illustrent, en perspective, une poussette selon un premier mode de réalisation de l'invention, en position dépliée ;
- les figures 3A à 3C sont des vues de côté de la poussette de la figure 1 au cours de son pliage/dépliage ;
- les figures 4A et 4B sont des vues de dessus de la poussette de la figure 1, dans la position dépliée et dans la position pliée respectivement ;
- la figure 5 est une vue éclatée d'une partie des éléments constituant la poussette de la figure 1 ;
- les figures 6A et 6B sont des vues de côté de la poussette selon le premier mode de réalisation de l'invention illustrant un premier exemple de mise en œuvre des moyens de verrouillage du pliage/dépliage ;
- les figures 7A et 7B sont des vues de côté de la poussette selon le premier mode de réalisation de l'invention illustrant un deuxième exemple de mise en œuvre des moyens de verrouillage du pliage/dépliage ;
- la figure 8 illustre, en perspective, une poussette selon un deuxième mode de réalisation de l'invention, en position dépliée ;
- la figure 9 illustre, en vue partielle, le mécanisme de pliage de la poussette de la figure 8 ;
- les figures 10A et 10B illustrent, une vue en perspective et une vue de dessus en coupe respectivement, de la poussette de la figure 8, dans une position dépliée ;
- les figures 11A et 11B illustrent, une vue en perspective et une vue de dessus en coupe respectivement, de la poussette de la figure 8, dans une position pliée ;
- les 12A à 12C sont des vues de côté de la poussette de la figure 8 au cours de son pliage/dépliage ; et
- les figures 13A et 13B sont des vues de dessus de la poussette de la figure 8, dans la position dépliée et dans la position pliée respectivement.

### 6. Description détaillée de deux modes de réalisation de l'invention

L'invention concerne donc un nouveau châssis de poussette présentant une nouvelle cinématique de pliage. Ce châssis peut notamment être un châssis de poussette à trois roues ou blocs de roues.

L'invention concerne également, bien sûr, les poussettes mettant en œuvre un tel châssis, et équipées d'un dispositif de transport d'enfant, tel qu'un hamac, amovible ou non. Pour faciliter la compréhension de l'invention, on décrit ci-après le châssis de poussette nu. L'homme du métier saura aisément équiper de façon classique un tel châssis d'un hamac, d'une nacelle ou d'une coque, ou un élément similaire, qu'il soit amovible (par exemple à l'aide d'éléments de liaison connus sous la marque « *Moduloclip* » développés par la Demanderesse), ou fixe, rigide ou souple, réglable au niveau du dossier et/ou de l'assise,...

Pour répondre aux problèmes de l'art antérieur mentionnés ci-dessus, et notamment à celui de la compacité optimale de la poussette suite au pliage, l'invention propose une cinématique de pliage dont le principe se base sur le rapprochement des roues arrière selon au moins deux axes, à savoir un rapprochement des roues arrière l'une par rapport à l'autre et vers la roue avant.

En outre, le pliage de la poussette combine ce rapprochement des roues avec le rapprochement des portions inférieure et supérieure de la poussette.

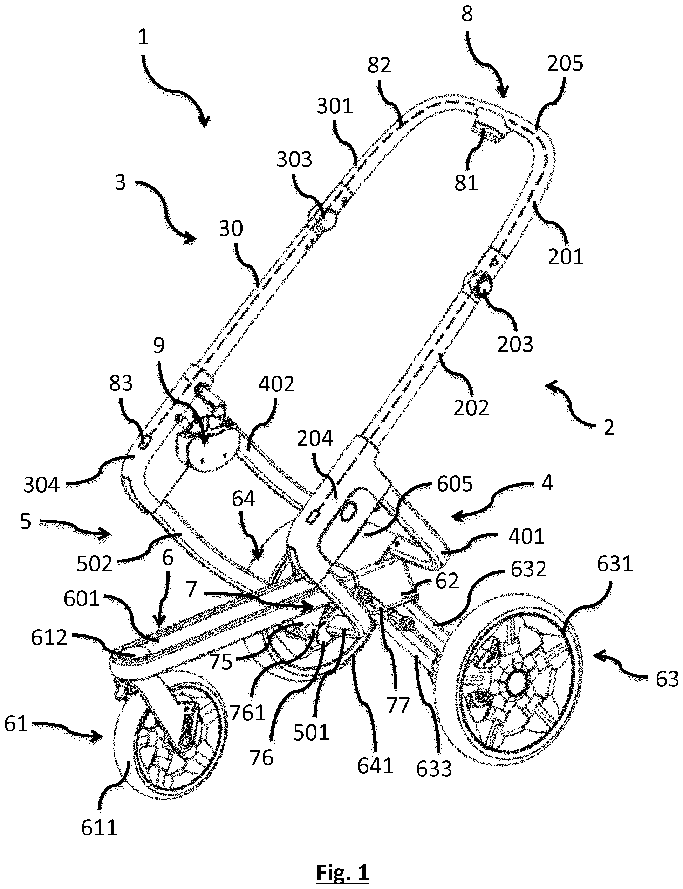

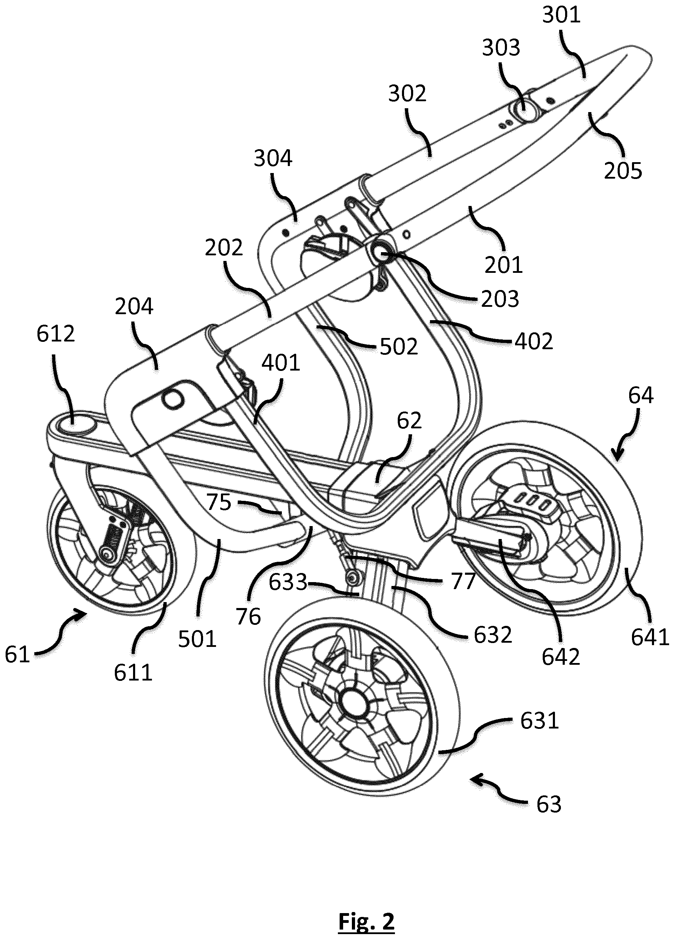

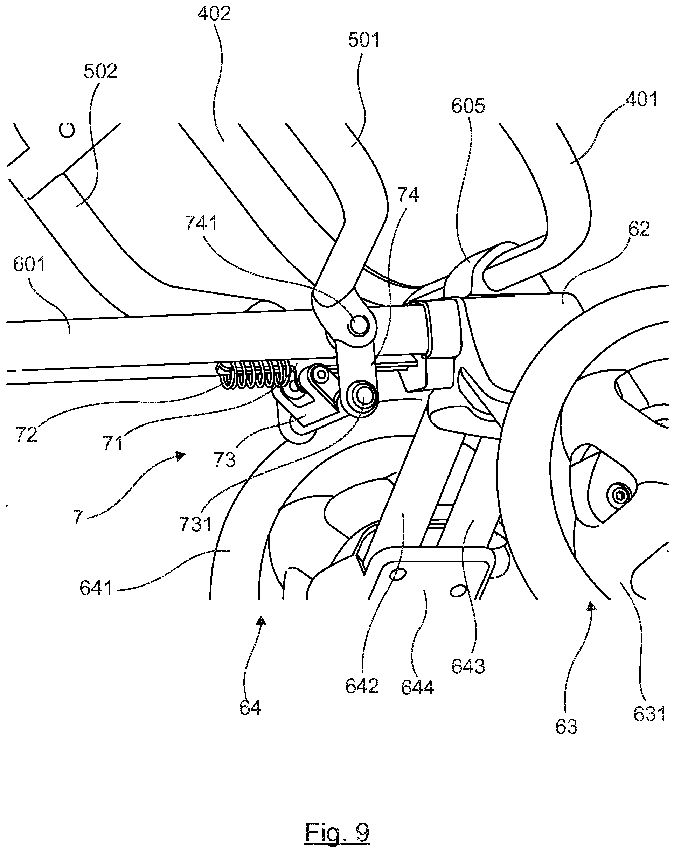

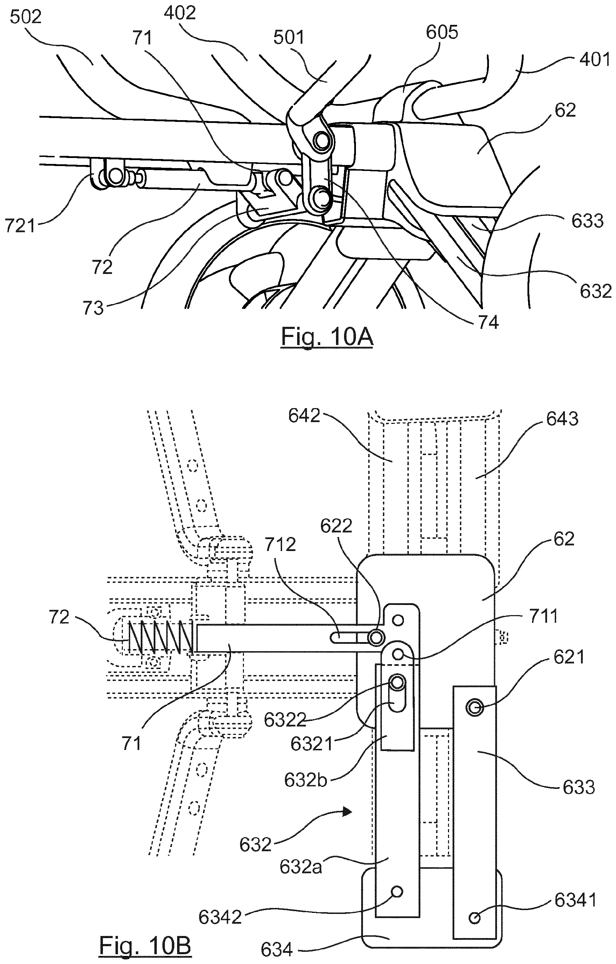

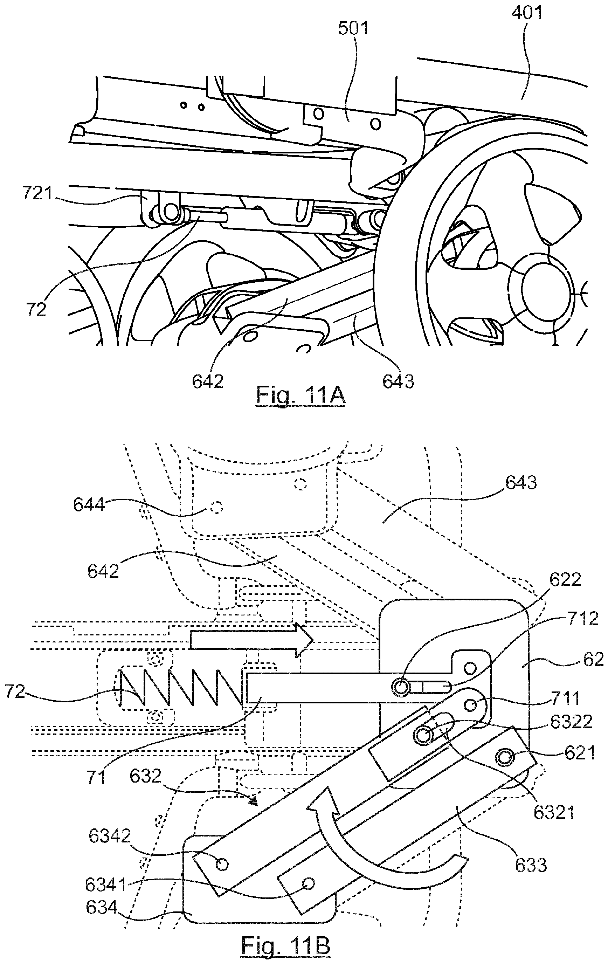

Les modes de réalisation décrits à titre d'exemple, et illustrés par les figures 1 à 13B, concernent un châssis pliant de voiture d'enfant à trois roues sur lequel peut être monté un hamac notamment qui, pour des raisons de clarté, n'est pas illustré.

De façon générale, le châssis pliant 1 de l'invention comprend une portion, ou partie, supérieure 2, 3, 4, 5 et une portion, ou partie, inférieure présentant une poutre centrale 601 portant les roues ou blocs de roues. Selon l'invention, lors du pliage, la largeur de la portion inférieure est réduite (les roues arrière sont rapprochées de la poutre centrale, tout en restant parallèles entre elles), alors que la largeur de la partie supérieure reste constante, ce qui permet l'utilisation d'un siège, d'un hamac, d'une coque ou d'une nacelle non pliable en largeur. Cet élément de réception 9 d'un dispositif de transport d'enfant (non représenté) est avantageusement amovible.

La portion supérieure du châssis comprend ici un arceau avant 5 et un arceau arrière 4 reliés chacun, de manière articulée, à la poutre centrale 601. Les arceaux 4 et 5 sont en forme de U et leur solidarisation à la poutre centrale se situe sensiblement au centre du U.

Les extrémités supérieures latérales des arceaux 4 et 5 sont reliées, de manière articulée, à une embase permettant la solidarisation avec le poussoir constitué d'une portion latérale droite 2 et d'une portion latérale gauche 3. Les portion latérales droite et gauche sont reliées l'une à l'autre par une barre de poussée, ou poignée, 205.

La poutre centrale 601 présente, sur sa partie avant, un bloc de roue avant, et sur sa partie arrière, deux blocs de roues arrière situés de part et d'autre de la poutre centrale 601.

Selon l'invention, un élément de la portion supérieure, par exemple l'arceau 5, est monté mobile en rotation par rapport à la portion inférieure, autour d'un axe fixe par rapport à la poutre 601. On dispose ainsi d'une liaison simple et fiable entre les portions supérieure et inférieure, sans coulisseau monté sur la poutre. Un mécanisme de transmission adapté permet de transformer cette rotation en un mouvement complexe, contrôlant le rapprochement des roues arrière, tout en les conservant parallèles entre elles.

Cet aspect est important, pour permettre de déplacer aisément la poussette, lorsqu'elle est en position pliée.

On peut noter que, dans certains modes de réalisation, ceci permet également de définir au moins une position de transport intermédiaire, dans laquelle les roues arrière sont rapprochées, par rapport à la situation entièrement dépliée. Cette approche de réduction de la voie permet, par exemple, de définir une position de transport légèrement moins stable, mais à voie arrière réduite, adaptée par exemple à une utilisation sur un trottoir peu large, dans un magasin, au passage d'une caisse, dans un ascenseur...

### 6.1 - Description d'un premier mode de réalisation

### 6.1.1 - Description de la portion supérieure du châssis 1 :

Dans le premier mode de réalisation, illustré sur les figures 1 à 7B, un châssis pliant 1 de voiture d'enfant comprend une portion supérieure constituée de deux arceaux et d'un poussoir formant les moyens de guidage de la poussette.

Plus précisément, le poussoir de la portion supérieure comprend une portion latérale droite 2 et une portion latérale gauche 3, présentant chacune un montant supérieur 201, 301 prolongé par un montant inférieur 202, 302.

Les montants supérieurs 201, 301 s'étendent sensiblement parallèlement et sont reliés l'un à l'autre sur leur partie supérieure par une poignée, ou barre de poussée, 205 s'étendant sensiblement perpendiculairement aux montants supérieurs 201, 301.

La partie inférieure des montants supérieurs 201, 301 est montée articulée à une première extrémité supérieure des montants inférieurs 202, 302 par l'intermédiaire d'une liaison pivot, ou élément d'articulation, 203, 303 respectivement.

L'angle entre les montants supérieurs et inférieurs est donc réglable, ce qui permet de régler la hauteur de la poignée 205 de façon à adapter la position de cette dernière par rapport à la taille de l'utilisateur, par exemple.

Une seconde extrémité inférieure des montants inférieurs 202, 302 est montée fixe à un élément de liaison, ou embase, 204, 304 respectivement. Les embases 204, 304 relient les portions supérieures latérales 2, 3 du châssis aux portions inférieures 4, 5 du châssis.

La portion supérieure du châssis comprend également deux arceaux 4 et 5 en U constitués chacun de deux jambes en forme de L.

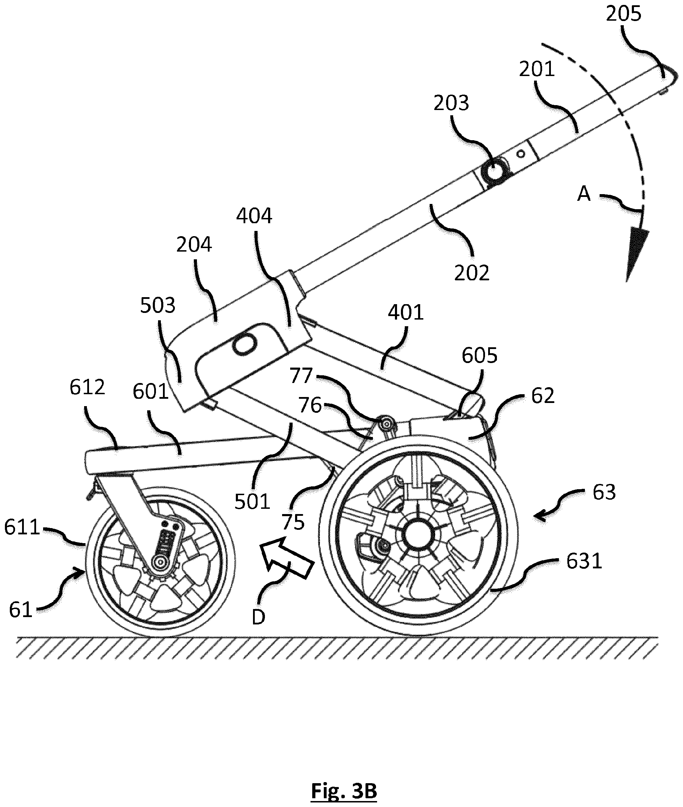

Plus précisément, l'arceau arrière, 4 (c'est-à-dire l'arceau le plus proche des blocs de roues arrière), comprend deux jambes 401, 402 dont une première extrémité est montée pivotante sur l'embase 204, 304 respectivement par le biais d'une articulation 404 (visible sur la figure 3B).

Une deuxième extrémité des jambes 401, 402 est montée de manière pivotante sur un support central 605 situé à l'arrière de la poutre 601.

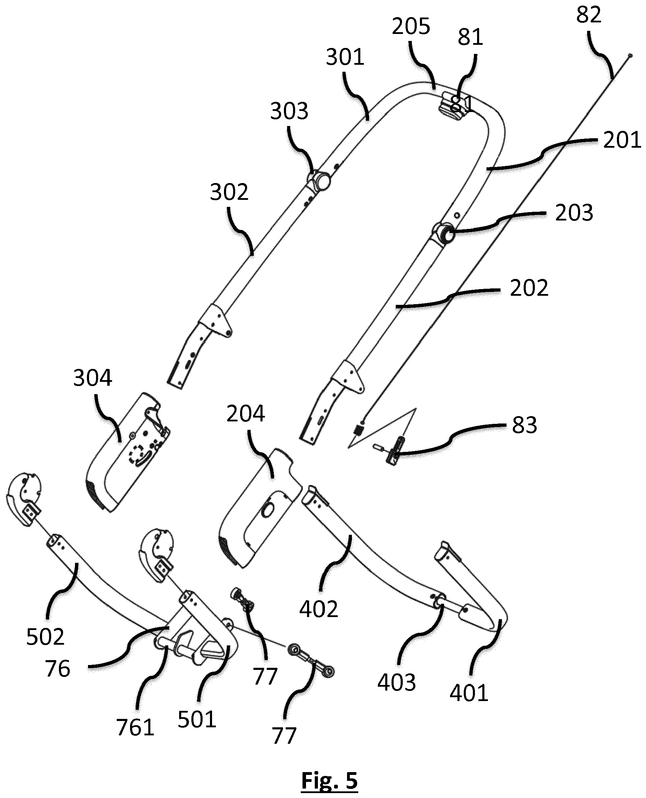

Plus précisément, les deuxièmes extrémités des jambes 401, 402 sont reliées entre elles par un axe de rotation 403 (visible sur la figure 5) coopérant avec le support central 605. Les jambes 401, 402 forment ainsi l'arceau arrière 4, centré sur le support central 605.

L'arceau avant (c'est-à-dire l'arceau le plus proche du bloc de roue avant), ou élément mobile en rotation, 5 comprend deux jambes 501, 502 dont une première extrémité est montée pivotante sur l'embase 204, 304, respectivement par le biais d'une articulation 503 (visible sur la figure 3B).

Une deuxième extrémité des jambes 501, 502 est montée fixe sur un levier 76 pivotant. Les leviers 76 pivotant sont montés de chaque côté de la poutre centrale 601.

Les arceaux 4, 5 sont parallèles entre eux dans la positon dépliée de la figure 1 et centrés chacun sur la portion inférieure 6 du châssis pliant 1 de la poussette.

Les embases 204, 304 ainsi que les arceaux avant 5 et arrière 4 forment ensemble les moyens de contrôle du pliage/dépliage du châssis 1 de la poussette.

### 6.1.2 - Description de la portion inférieure 6 du châssis 1 :

Comme indiqué ci-dessus, la portion inférieure 6 du châssis 1 comprend une poutre centrale 601 présentant, à son extrémité avant, un bloc de roue 61 avant.

Le bloc de roue 61 avant porte par exemple, une ou deux roues 611, et est relié à la poutre centrale 601 par le biais d'une liaison pivot 612 permettant ainsi au bloc de roue avant 61 de pivoter de manière à suivre la direction souhaitée par l'utilisateur.

L'extrémité arrière de la poutre centrale 601 comprend un socle 62 sur lequel sont montés articulés les deux blocs de roues arrières 63 et 64 par l'intermédiaire d'un ensemble de deux bras respectivement.

Plus précisément, les deux blocs de roues arrières 63, 64 sont reliés au socle 62 à l'aide d'articulations (non visibles sur les figures) solidaires du socle 62 qui permettent le pivotement des bras 632, 633, 642, 643 en direction de la poutre centrale 601 lorsque la poussette est pliée, et inversement.

Chacun des blocs de roues arrière 63, 64 porte, par exemple, une ou deux roues 631, 641.

Dans cet exemple, les bras sont parallèles et forment avec les articulations situés au niveau du socle 62 et de la roue 631, 641, un parallélogramme permettant de maintenir les roues arrière 63, 64 parallèles au cours du pliage/dépliage de la poussette.

Contrairement au bloc de roue avant 61, les blocs de roues arrière 63, 64 ne sont pas directionnels. En d'autres mots, l'axe de rotation des roues arrière reste fixe et perpendiculaire à l'axe longitudinal de la poutre centrale 601, en position d'utilisation de la poussette (mais aussi en position pliée).

Par ailleurs, le support central 605 portant l'arceau arrière 4 est solidaire du socle 62. Dans ce mode de réalisation, le support 605 est monté fixe sur le socle 62 et ce sont donc les jambes 401, 402 qui pivotent sur le support centrale 605 lors du pliage et dépliage de la poussette.

Le support 605 présente un angle d'inclinaison par rapport à la poutre centrale 601 compris entre 15 et 90°, de préférence entre 30 et 45°.

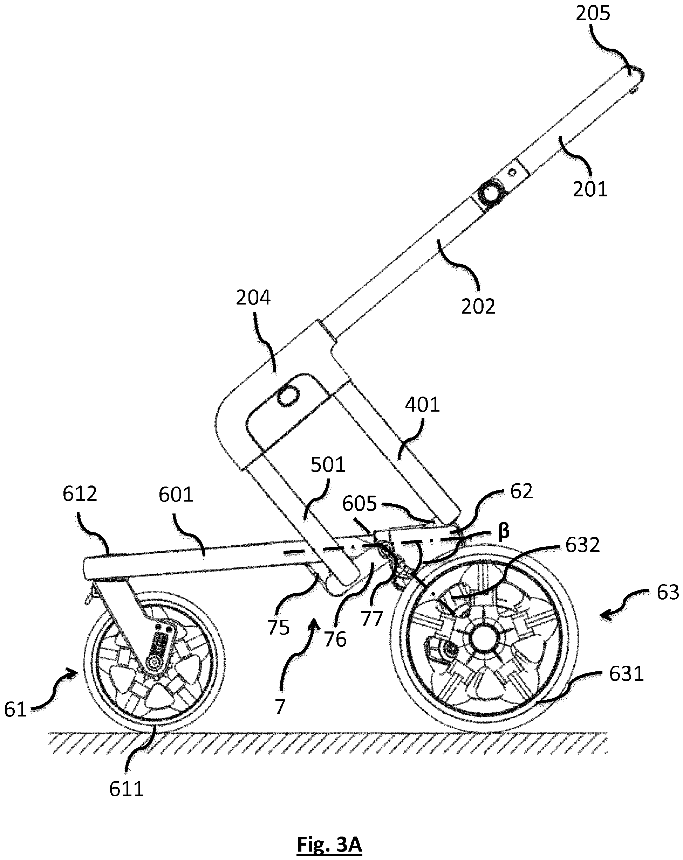

Dans la position dépliée du châssis 1 de la poussette (figure 3A, notamment), l'arceau arrière 4 s'étend perpendiculairement au support 605.

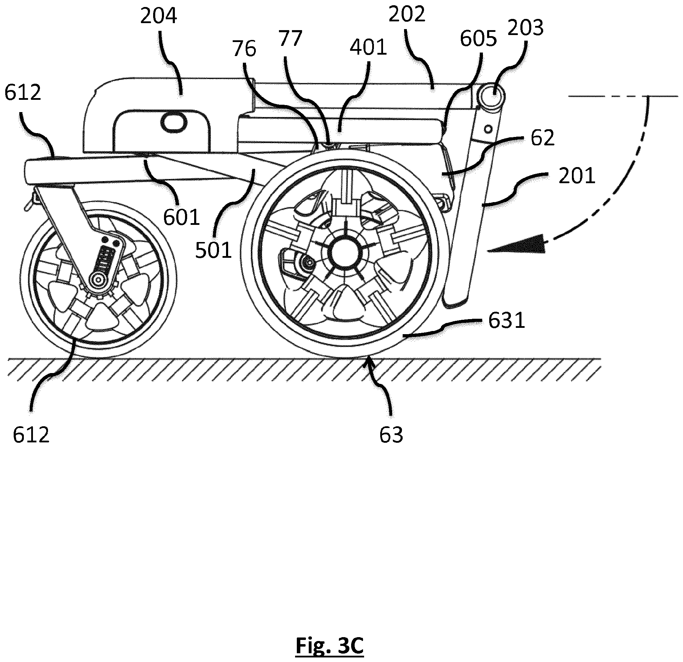

Dans la position pliée du châssis 1 de la poussette (figure 3C, notamment), l'arceau arrière 4 s'étend sensiblement parallèlement à la poutre centrale 601.

Par ailleurs, la poutre centrale 601 présente, sur sa face/surface inférieure, au voisinage du socle 62, un triangle de fixation 75 comprenant une ouverture sensiblement circulaire apte à coopérer avec un axe de rotation 761.

L'axe de rotation 761, centré par rapport à la poutre centrale 601, est solidaire de chacune des pièces mobiles en rotation, ou leviers, 76 sur lesquels sont fixées les jambes latérales 501,502 de l'arceau avant 5. Les leviers 76 sont donc aptes à pivoter autour de l'axe de rotation 761.

Une deuxième extrémité des leviers 76 est reliée, par le biais d'une biellette 77, à un bras 632, 642 des blocs de roues arrière 63, 64.

La biellette 77 est donc montée articulée d'une part, sur un bras 632, 642 d'un bloc de roue arrière 63, 64, et d'autre part à un levier pivotant 76.

Chaque biellette 77 s'étend entre un des bras 632, 642 et un des leviers 76, ces derniers étant mobiles en rotation autour d'un axe 761 qui est perpendiculaire à l'axe longitudinal de la poutre centrale 601.

L'axe longitudinal de la biellette 77 est incliné par rapport à l'axe longitudinal de la poutre centrale 601. En d'autres termes, l'axe longitudinal de la biellette 77 et l'axe longitudinal de la poutre centrale 601 ne sont pas parallèles.

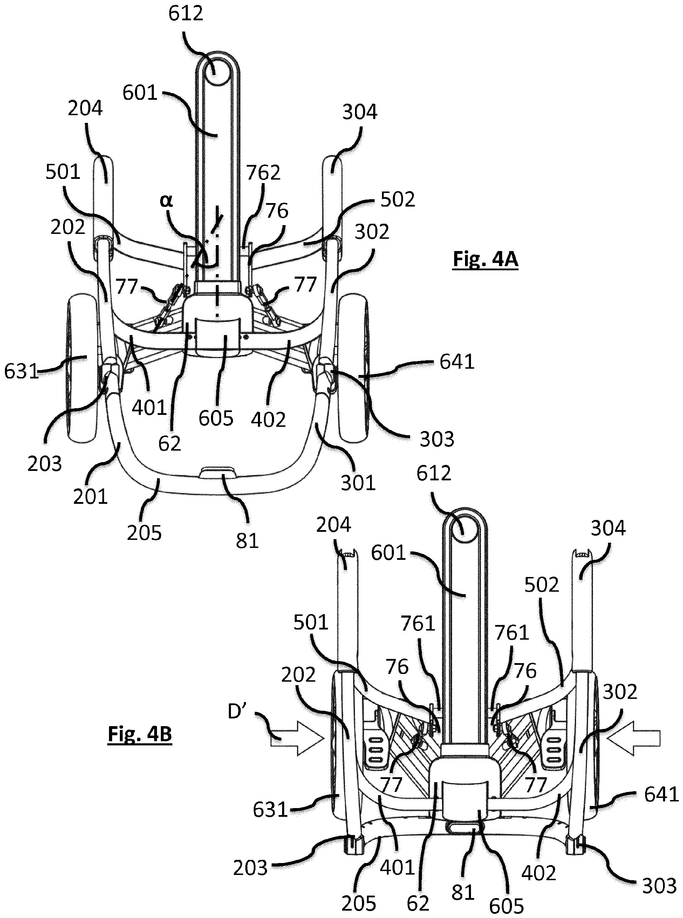

Plus précisément, l'axe longitudinal de la biellette 77 définit un premier angle α avec le plan transversal de la poutre centrale 601 compris entre 20° et 45°, tel qu'indiqué sur la figure 4A. Préférentiellement, l'angle α est égal à 30°.

Ce plan transversal de la poutre centrale 601 s'étend perpendiculairement au plan de la surface supérieure (tournée vers la portion supérieure 2,3 du châssis 1) de la poutre centrale 601.

En outre, l'axe longitudinal de la biellette 77 définit un deuxième angle **β** avec le plan longitudinal de la poutre centrale 601 compris entre 20° et 60°, tel qu'indiqué à la figure 3A. Préférentiellement, l'angle **β** est égal à 50°.

Le plan longitudinal de la poutre centrale 601 est défini par un plan s'étendant parallèlement au plan de la surface supérieure de la poutre centrale 601.

Le triangle de fixation 75, les leviers 76 et les biellettes 77 forment ainsi le mécanisme de transmission 7 permettant le pliage/dépliage des blocs de roues arrière 63, 64.

### 6.1.3 - Description de la séquence de pliage/dépliage du châssis 1 :

Les figures 3A à 3C illustrent différentes étapes du pliage de la poussette qui s'effectue en une seule manœuvre, la poussette étant dans une configuration dépliée sur la figure 3A et dans une configuration pliée sur la figure 3C.

L'amorce du pliage, c'est-à-dire le passage de la configuration illustrée par la figure 3A (poussette totalement dépliée) à celle illustrée par la figure 3B (pliage amorcé), est obtenu en repliant manuellement les portions supérieures de châssis 2, 3 vers le bas, autour des articulations 404 des embases 204, 304, conformément à la direction indiquée par la flèche A.

À mesure que les portions supérieures de châssis 2, 3 sont repliées vers le bas (figure 3B) par l'utilisateur et/ou par gravité (une assistance au pliage pouvant également être envisagée), les embases 204, 304 se déplacent vers la poutre centrale 601 tout en pivotant légèrement dans le sens horaire.

Ce déplacement des embases 204, 304 entraîne la rotation des arceaux 4, 5 vers l'avant. Plus précisément, les jambes latérales 401, 402, 501, 502 pivotent vers la poutre centrale 601, dans le sens antihoraire.

En conséquence, les leviers 76 pivotent vers le haut autour de l'axe 761 et entrainent les biellettes 77 vers le haut et l'avant de la poussette. Ce déplacement des biellettes 77 engendre le déplacement des blocs de roues arrière 63, 64 vers la poutre centrale 601 (c'est-à-dire leur rapprochement) et vers le bloc de roues avant, tel qu'indiqué par les flèches D et D' (figures 3B et 4B).

En position totalement pliée, comme illustré à la figure 3C, les portions supérieures 2, 3 sont totalement abaissées.

On note que les montants inférieurs 202, 302 sont alors repliés sur l'arceau arrière 4 qui est lui-même replié sur la poutre centrale 601.

Dans cette position, les montants inférieurs 202, 302, les embases 204, 304 et l'arceau arrière 4 sont sensiblement parallèles à la poutre centrale 601. Cette configuration permet ainsi une compacité optimale puisque l'ensemble de ces éléments n'occupe plus qu'un espace/volume réduit.

Ainsi, le pivotement des leviers 76 permet de rapprocher les blocs de roues arrière 63, 64 vers la roue avant sous l'effet des biellettes 77, comme illustré sur les figures 3B et 3C.

La configuration des biellettes 77 permet de rapprocher les blocs de roues arrière dans deux autres directions, à savoir vers l'intérieur de la poussette ou poutre centrale 601 (les blocs de roues arrière 63, 64 se rapprochant autour de la poutre centrale 601), comme illustré sur les figures 4A et 4B, et vers le haut de la poussette (comme illustré sur les figures 3B et 3C). Tout au long du pliage, les roues touchent le sol et restent parallèles.

Il est possible, en toute fin de pliage, de faire pivoter manuellement les montants supérieurs 201, 301, portant la poignée 205, vers les blocs de roues arrière 63, 64 de manière à optimiser davantage le volume de la poussette dans sa position pliée.

Comme illustré sur les figures 3C et 4B, le pliage s'effectue donc dans les trois directions, de manière fluide et ergonomique puisque l'utilisateur peut effectuer cette manœuvre de pliage en un seul mouvement.

### 6.1.4 - Description du système de verrouillage 8 du châssis 1 :

Le châssis de pliage 1 comprend, en outre, un système de verrouillage 8 du châssis 1 dans sa position dépliée.

En complément, le châssis 1 peut être verrouillé dans sa position pliée.

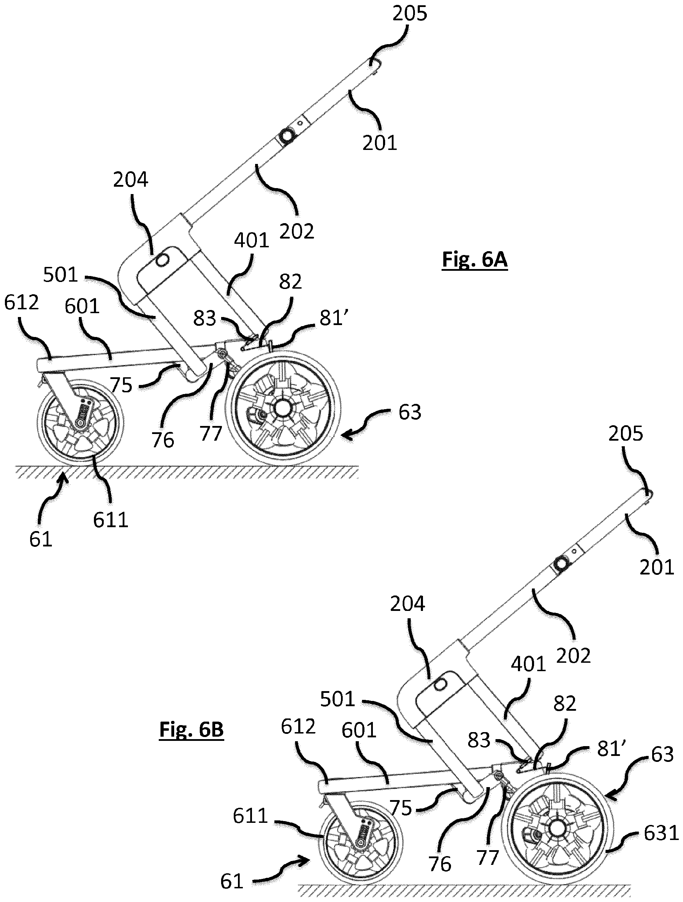

Le système de verrouillage 8 comprend des moyens de commande 81 du déverrouillage, sous la forme d'un bouton poussoir, agissant sur au moins un câble 82 relié à un élément de verrouillage 83 empêchant le mouvement d'une articulation (en l'occurrence l'articulation référencée sur le mode de réalisation de la figure 1 et des variantes illustrées sur les figures 6A à 7B).

Dans le but d'améliorer l'ergonomie et de simplifier les manipulations nécessaires au pliage/dépliage de la poussette, le bouton poussoir 81 est situé sur la poignée 205 du châssis de manière à être accessible aisément par l'utilisateur.

Le bouton poussoir 81 est mobile entre une position de repos et une positon de déverrouillage dans laquelle il agit sur le câble 82, généralement métallique, traversant les montants supérieurs et inférieurs 201, 202, 301, 302, provoquant ainsi le déplacement de l'élément de verrouillage 83.

Dans le mode de réalisation illustré sur les figures 1 à 5, l'élément de verrouillage 83 est situé dans l'embase 204, 304 et verrouille l'articulation 503 empêchant ainsi le mouvement de l'arceau avant 4, et donc de l'ensemble du châssis 1.

Les moyens de verrouillage 8 du châssis sont prévus pour éviter le pliage intempestif du châssis 1 de la poussette. Ils peuvent être conçus pour que le verrouillage soit automatique, en fin de dépliage.

Dans une première variante, illustrée sur les figures 6A et 6B, le système de verrouillage 8' comprend des moyens de commande 81' sous la forme de deux pédales (non représentées) situées de part et d'autre du socle 62 et agissant chacune sur un élément de verrouillage 83' bloquant le mouvement de l'arceau avant 5 par rapport aux leviers 604.

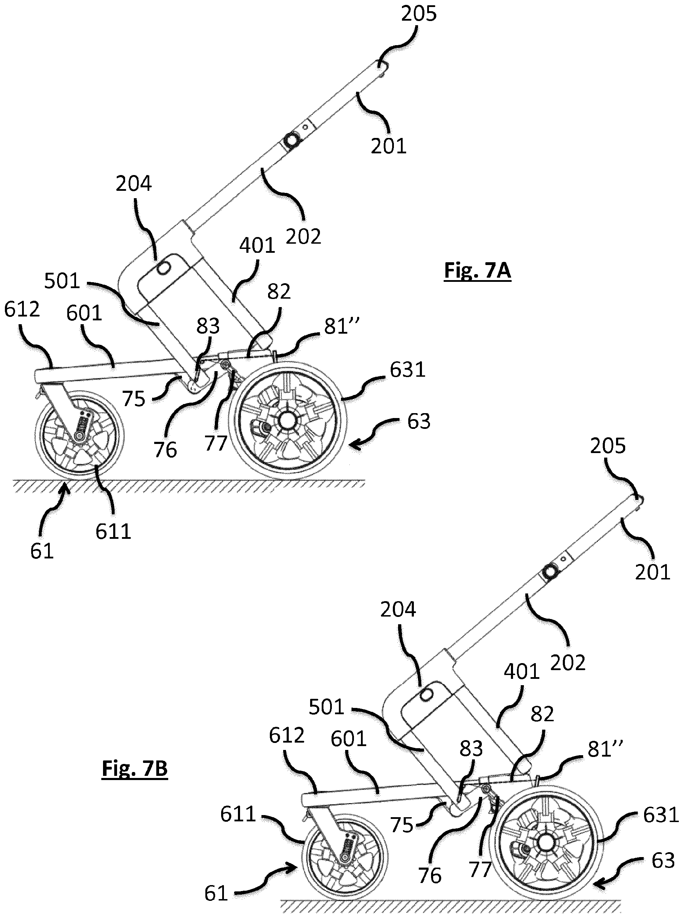

Dans une deuxième variante, illustrée sur les figures 7A et 7B, le système de verrouillage 8" comprend des moyens de commande 81" sous la forme d'une pédale (non représentées) située sur le socle 62 et agissant sur un élément de verrouillage 83", bloquant le mouvement de l'arceau arrière 4 par rapport au support centrale 605.

Selon la technique de l'invention, on obtient donc une cinématique de pliage se décomposant essentiellement de la manière suivante :
- les moyens de verrouillage 8 sont déverrouillés à l'aide des moyens de commande 81 présents sur la poignée (et/ou d'une ou deux pédales) de manière à libérer le mouvement d'une ou de plusieurs articulations ;
- le pliage est amorcé en pivotant les portions latérales 2, 3 vers le bas ;
- les embases 204, 304 pivotent et entrainent en rotation les arceaux avant 4 et arrière 5 ;
- les leviers 76 pivotent à leur tour et entrainent les bielles 77 qui amorcent le rapprochement des blocs de roues arrière 63, 64 dans les trois directions ;
- les montants supérieurs 201, 301 sont pivotés vers les blocs de roues arrière 63, 64 jusqu'au pliage complet de la poussette.

Lors du dépliage, l'utilisateur tire les portions supérieures 2, 3 vers le haut.

Bien entendu, des variantes de l'invention peuvent être envisagées.

Les bras peuvent comprendre une unique tige.

### 6.2 - Description d'un deuxième mode de réalisation

### 6.2.1 - Description de la portion supérieure du châssis 1 :

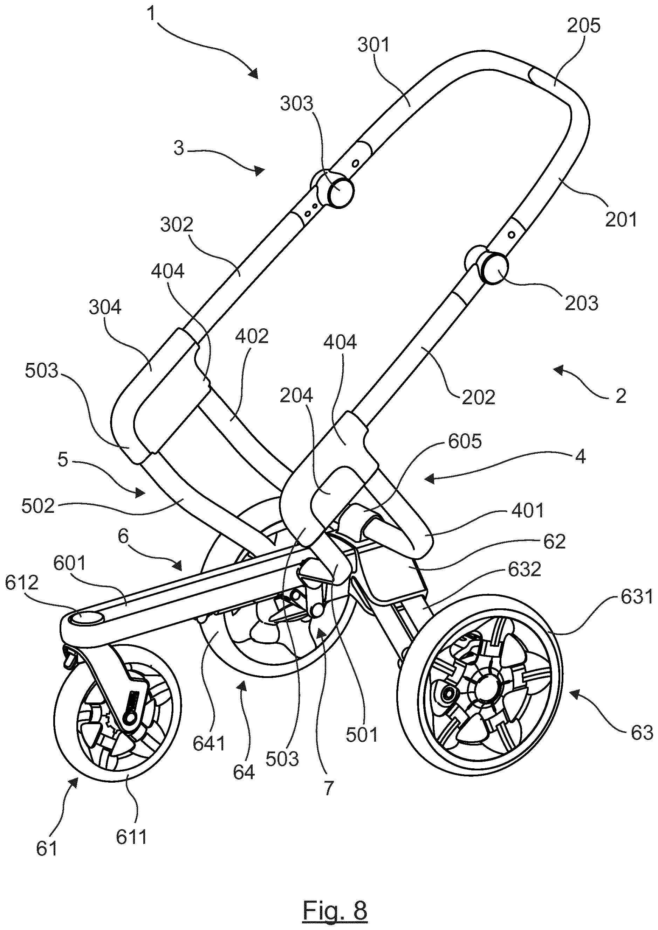

Dans le deuxième mode de réalisation, illustré sur les figures 8 à 13B, un châssis pliant 1 de voiture d'enfant comprend une portion supérieure constituée de deux arceaux et d'un poussoir formant les moyens de guidage de la poussette.

Plus précisément, le poussoir de la portion supérieure comprend une portion latérale droite 2 et une portion latérale gauche 3, présentant chacune un montant supérieur 201, 301 prolongé par un montant inférieur 202, 302.

Les montants supérieurs 201, 301 s'étendent sensiblement parallèlement et sont reliés l'un à l'autre sur leur partie supérieure par une poignée, ou barre de poussée, 205 s'étendant sensiblement perpendiculairement aux montants supérieurs 201, 301.

La partie inférieure des montants supérieurs 201, 301 est montée articulée à une première extrémité supérieure des montants inférieurs 202, 302 par l'intermédiaire d'une liaison pivot, ou élément d'articulation, 203, 303 respectivement.

L'angle entre les montants supérieurs et inférieurs est donc réglable, ce qui permet de régler la hauteur de la poignée 205 de façon à adapter la position de cette dernière par rapport à la taille de l'utilisateur, par exemple.

Une seconde extrémité inférieure des montants inférieurs 202, 302 est montée fixe à un élément de liaison, ou embase, 204, 304 respectivement. Les embases 204, 304 relient les portions supérieures latérales 2, 3 du châssis aux portions inférieures 4, 5 du châssis.

La portion supérieure du châssis comprend également deux arceaux 4 et 5 en U constitués chacun de deux jambes en forme de L.

Plus précisément, l'arceau arrière 4 (c'est-à-dire l'arceau le plus proche des blocs de roues arrière), comprend deux jambes 401, 402 dont une première extrémité est montée pivotante sur l'embase 204, 304 respectivement par le biais d'une articulation 404.

Une deuxième extrémité des jambes 401, 402 est montée de manière pivotante sur un support central 605 situé à l'arrière de la poutre 601.

Plus précisément, les deuxièmes extrémités des jambes latérales 401, 402 sont reliées entre elles par un axe de rotation 403 (non visible) coopérant avec le support central 605. Les jambes latérales 401, 402 forment ainsi l'arceau arrière 4, centré sur le support central 605.

L'arceau avant (c'est-à-dire l'arceau le plus proche du bloc de roue avant), ou élément mobile en rotation 5, comprend deux jambes 501, 502 dont une première extrémité est montée pivotante sur l'embase 204, 304, respectivement par le biais d'une articulation 503.

Une deuxième extrémité des jambes 501, 502 est montée en rotation sur la poutre centrale 601. Les jambes latérales 501, 502 forment ainsi l'arceau avant 5 qui est centré sur la poutre centrale 601.

Les arceaux 4, 5 sont parallèles entre eux dans la positon dépliée de la poussette illustrée sur la figure 8 et centrés chacun sur la portion inférieure 6 du châssis pliant 1 de la poussette.

Les embases 204, 304 ainsi que les arceaux avant 5 et arrière 4 forment ensemble les moyens de contrôle du pliage/dépliage du châssis 1 de la poussette.

### 6.2.2 - Description de la portion inférieure 6 du châssis 1 :

Comme indiqué ci-dessus, la portion inférieure 6 du châssis 1 comprend une poutre centrale 601 présentant, à son extrémité avant, un bloc de roue 61 avant.

Le bloc de roue 61 avant porte par exemple, une ou deux roues 611, et est relié à la poutre centrale 601 par le biais d'une liaison pivot 612 permettant ainsi au bloc de roue avant 61 de pivoter de manière à suivre la direction souhaitée par l'utilisateur.

L'extrémité arrière de la poutre centrale 601 comprend un socle 62 sur lequel sont montés articulés les deux blocs de roues arrière 63 et 64. Chacun des blocs de roues arrière 63, 64 porte, par exemple, une ou deux roues 631, 641.

Contrairement au bloc de roue avant 61, les blocs de roues arrière 63, 64 ne sont pas directionnels. En d'autres mots, l'axe de rotation des roues arrière reste fixe et perpendiculaire à l'axe longitudinal de la poutre centrale 601, en position d'utilisation de la poussette (mais aussi en position pliée).

Dans cet exemple, chacun des blocs de roues arrière 63 et 64 est relié au socle 62 par le biais de deux bras parallèles 632, 633 et 642, 643 respectivement.

Par souci de clarté, on décrit ici la liaison entre le bloc de roue arrière gauche 63 et le châssis 1 de la poussette. On comprend que le bloc de roue arrière droit 64 est relié au châssis 1 de façon similaire.

Plus précisément, le premier bras 633, situé le plus près de l'arrière de la poussette, est monté en rotation d'une part sur le socle 62 de la poutre centrale 601 et d'autre part sur une plateforme 634 du bloc de roue arrière 63.

Une première extrémité du premier bras 633 est montée sur le socle 62 par le biais d'une articulation 621 située sensiblement dans le coin arrière gauche du socle 62, c'est-à-dire le coin arrière situé du côté du bloc de roue arrière 63.

La deuxième extrémité du premier bras 633 est montée sur une plateforme 634 du bloc de roue arrière 63. La plateforme 634 est de forme sensiblement rectangulaire et porte une première articulation 6341, situé à l'arrière de cette dernière, sur laquelle est fixée la deuxième extrémité du premier bras 633.

Le deuxième bras 632, c'est-à-dire le bras situé le plus près de l'avant de la poussette, est de longueur variable. En effet, le bras 632 est constitué de deux parties 632a et 632b qui sont mobiles en translation l'une par rapport à l'autre. Pour ce faire, la partie 632a du bras 632 comprend, à une première extrémité, un pion de guidage 6322 apte à coopérer avec une lumière oblongue 6321 définie dans la partie 632b du bras 632. Cette lumière oblongue 6321 s'étend longitudinalement et est située sensiblement au centre de la partie 632a du bras 632.

La course de déplacement entre les deux parties du bras 632 est adaptée de façon à assurer un mouvement du bras permettant un pliage optimal du châssis.

La deuxième extrémité de la partie 632b du bras est montée de manière articulée sur la plateforme 634 par l'intermédiaire d'une deuxième articulation 6342, située à l'avant de la plateforme 634.

L'extrémité de la partie 632b du bras 632 la plus éloignée de la partie 632a est reliée à un élément coulissant 71 du mécanisme 7 de transmission permettant le pliage des blocs de roues arrière 63, 64.

L'élément coulissant 71 est en forme de « T » et s'étend dans un plan longitudinal sensiblement parallèle au plan longitudinal de la poutre centrale 601. La barre horizontale du « T » est située du côté le plus proche de l'arrière de la poussette. Plus précisément, la barre horizontale du « T » est située à l'intérieur du socle 62.

Ainsi, la partie 632b du bras est reliée à l'élément coulissant 71 par le biais d'une articulation 711 située à une première extrémité de la barre horizontale du « T » située du côté du bloc de roue correspondant (ici le bloc 63).

L'ensemble constitué par les bras 632, 633, la plateforme 634 du bloc de roue arrière 63, l'élément coulissant 71 et le socle 62 forme un parallélogramme permettant à la roue arrière 631 de rester parallèle à la poutre centrale 601 aussi bien dans la position pliée que dépliée de la poussette.

De façon symétrique par rapport à la poutre centrale 601, le bloc de roue arrière 64 est relié, par l'intermédiaire de la plateforme 644, au socle 62 et à l'élément coulissant 71 par le biais de deux bras 643 et 642 présentant la même structure que les bras 633 et 632.

Comme illustré sur les figures 8, 9, 10A et 11A, le mécanisme 7 de pliage des blocs de roues arrière 63 et 64 est situé d'une part sous la poutre centrale 601 et d'autre part à l'intérieur du socle 62.

L'élément coulissant 71 comprend une lumière oblongue 712 s'étendant longitudinalement et à proximité de la barre horizontale du « T » de l'élément coulissant 71. Cette lumière 712 est configurée pour coopérer avec un pion 622 de guidage du coulissement solidaire du socle 62 et permettre un déplacement optimal de l'élément coulissant 71 par rapport au socle.

L'extrémité de l'élément coulissant 71 située à l'opposé de la barre horizontale du « T » est montée articulée à une première extrémité d'un élément 72 d'assistance au pliage. Une deuxième extrémité de l'élément d'assistance 72 est solidaire de la poutre centrale 601 par le biais d'une articulation 721.

L'élément 72 d'assistance au pliage est par exemple un ressort ou un piston à gaz ou à air. Tout autre élément permettant d'obtenir un résultat similaire peut être mis en œuvre.

L'extrémité de l'élément coulissant 71 située à l'opposé de la barre horizontale du « T » est également solidaire d'une première extrémité d'une entretoise, ou mâchoire, 73 de forme sensiblement en U. L'entretoise 73 est montée articulée par rapport à l'élément coulissant 71 et s'étend de part et d'autre de la poutre centrale 601 selon un axe perpendiculaire à l'axe longitudinal de la poutre centrale 601.

Une deuxième extrémité de l'entretoise 73 est solidaire d'une première extrémité d'un levier, ou bielle intermédiaire, 74 par le biais d'une articulation 731. La deuxième extrémité du levier 74 est reliée à la poutre centrale 601 et à la jambe 501 de l'arceau 5 du châssis 1 par le biais d'une articulation 741.

On peut noter que ce mécanisme particulier peut fonctionner, dans d'autres mises en œuvre non revendiquées, à l'aide de moyens d'actionnement autres qu'un élément mobile en rotation tel que l'arceau 5. En effet, le déplacement de l'élément coulissant peut être mis en œuvre de différentes manières, et notamment via un actionneur mobile en translation, tel qu'un vérin, un actionneur dédié (utilisable à la main ou au pied), voire de façon motorisée.

### 6.2.3 - Description de la séquence de pliaqe/dépliaqe du châssis 1 :

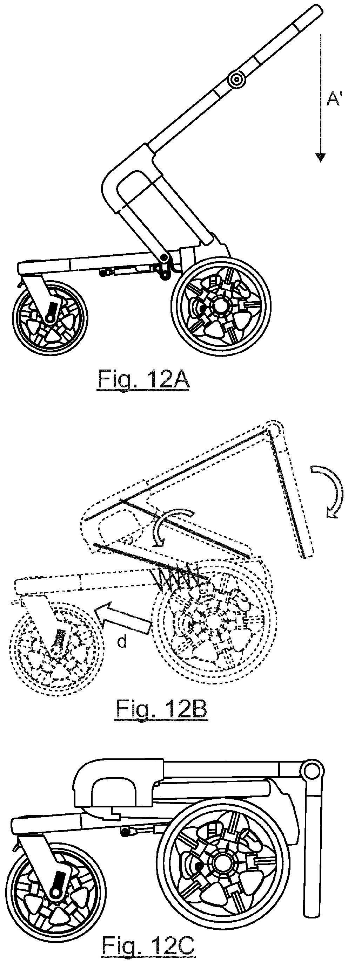

Les figures 12A à 12C illustrent différentes étapes du pliage de la poussette qui s'effectue en une seule manœuvre, la poussette étant dans une configuration dépliée sur la figure 12A et dans une configuration pliée sur la figure 12C.

L'amorce du pliage, c'est-à-dire le passage de la configuration illustrée par la figure 12A (poussette totalement dépliée) à celle illustrée par la figure 12B (pliage amorcé), est obtenu en repliant manuellement les portions supérieures de châssis 2, 3 vers le bas, autour des articulations 404 des embases 204, 304, conformément à la direction indiquée par la flèche A'.

À mesure que les portions supérieures de châssis 2, 3 sont repliées vers le bas (figure 12B) par l'utilisateur et par l'élément 72 d'assistance au pliage, les embases 204, 304 se déplacent vers la poutre centrale 601 tout en pivotant légèrement dans le sens horaire.

Ce déplacement des embases 204, 304 entraîne la rotation des arceaux 4, 5 vers l'avant. Plus précisément, les jambes latérales 401, 402, 501, 502 pivotent vers la poutre centrale 601, dans le sens antihoraire.

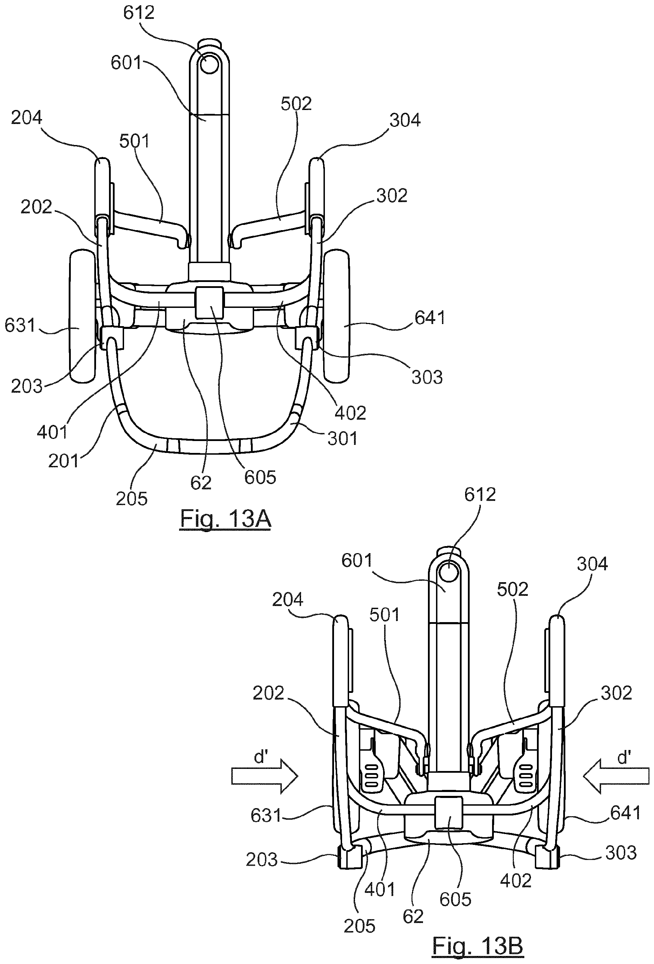

En conséquence, les leviers 74 pivotent dans le sens antihoraire autour de l'axe 741 et entrainent, dans le même sens, l'entretoise 73 en rotation. Ce déplacement de l'entretoise engendre la translation de l'élément coulissant 71 vers l'arrière de la poussette et donc le déplacement des blocs de roues arrière 63, 64 vers la poutre centrale 601 (c'est-à-dire leur rapprochement) et vers le bloc de roues avant, tel qu'indiqué par les flèches d et d' (figures 12B et 13B).

En position totalement pliée, comme illustré à la figure 12C, les portions supérieures 2, 3 sont totalement abaissées.

On note que les montants inférieurs 202, 302 sont alors repliés sur l'arceau arrière 4 qui est lui-même replié sur la poutre centrale 601.

Dans cette position, les montants inférieurs 202, 302, les embases 204, 304 et l'arceau arrière 4 sont sensiblement parallèles à la poutre centrale 601. Cette configuration permet ainsi une compacité optimale puisque l'ensemble de ces éléments n'occupe plus qu'un espace/volume réduit.

Ainsi, le pivotement des leviers 74 permet, par l'intermédiaire de l'entretoise 73 et de l'élément coulissant 71, de rapprocher les blocs de roues arrière 63, 64 vers la roue avant, comme illustré sur les figures 12B et 12C.

La configuration des bras 632, 633 et 642, 643 permet de rapprocher les blocs de roues arrière dans deux autres directions, à savoir vers l'intérieur de la poussette ou poutre centrale 601 (les blocs de roues arrière 63, 64 se rapprochant autour de la poutre centrale 601), comme illustré sur les figures 13A et 13B, et vers le haut de la poussette (comme illustré sur les figures 12B et 12C). Tout au long du pliage, les roues touchent le sol et restent parallèles.

Il est possible, en toute fin de pliage, de faire pivoter manuellement les montants supérieurs 201, 301, portant la poignée 205, vers les blocs de roues arrière 63, 64 de manière à optimiser davantage le volume de la poussette dans sa position pliée.

Comme illustré sur les figures 12C et 13B, le pliage s'effectue alors dans les trois directions, de manière fluide et ergonomique puisque l'utilisateur peut effectuer cette manœuvre de pliage en un seul mouvement.

## Revendications

1. Châssis pliant de poussette pour enfant, comprenant une partie supérieure présentant des moyens de réception (9) d'une assise et des moyens de guidage (205) de ladite poussette et une partie inférieure (6) présentant une poutre centrale (601) portant deux supports (63, 64) de roues arrière, reliés chacun à ladite poutre centrale (601) par un ensemble de deux bras parallèles (632, 633 ; 642, 643), articulés sur ladite poutre centrale,
**caractérisé en ce que** ladite partie supérieure comprend deux arceaux avant (5) et arrière (4) solidaires de ladite poutre centrale (601) et qui restent sensiblement parallèles entre eux dans les positions pliée et dépliée du châssis, ledit arceau avant (5) étant mobile en rotation autour d'un axe de rotation fixe par rapport à ladite poutre centrale (601) et agissant sur au moins un desdits bras (632, 633 ; 642, 643) de chaque ensemble, via un mécanisme de transmission (7), de façon à rapprocher lesdits supports de roue de ladite poutre centrale (601), pour prendre une position pliée et/ou à éloigner lesdits supports de roue de ladite poutre centrale, pour prendre une position dépliée.

2. Châssis selon la revendication 1, **caractérisé en ce que** ledit au moins un élément (5) mobile en rotation est articulé audit moyens de guidage (205), le déplacement de pliage et/ou de dépliage de ces derniers entraînant la rotation du ou desdits éléments (5) mobiles en rotation.

3. Châssis selon l'une quelconque des revendications 1 et 2, **caractérisé en ce que** lesdits bras (632, 633, 642, 643) s'étendent depuis la poutre centrale (601) vers l'arrière du châssis en position dépliée, et de la poutre centrale (601) vers l'avant du châssis en position pliée.

4. Châssis selon l'une des revendications 1 à 3, **caractérisé en ce que** le mécanisme de transmission (7) comprend et/ou coopère avec au moins un élément (72) d'assistance au pliage du châssis agissant sur ledit élément (5) mobile en rotation et/ou sur un élément coulissant (71) par rapport à ladite poutre centrale.

5. Châssis selon l'une des revendications 1 à 4, **caractérisé en ce qu'**au moins un desdits bras (632, 642), dit premier bras, est de longueur variable.

6. Châssis selon la revendication 5, **caractérisé en ce que** ledit premier bras est constitué de deux éléments (632a, 632b, 642a, 642b) aptes à coulisser l'un par rapport à l'autre, le pliage et/ou le dépliage de la partie supérieure du châssis entraînant le coulissement des deux éléments l'un par rapport à l'autre.

7. Châssis selon l'une des revendications 1 à 6, **caractérisé en ce que** le mécanisme de pliage (7) comprend un élément coulissant (71) solidaire d'au moins un desdits éléments (632a, 642a) dudit premier bras (632, 642).

8. Châssis selon la revendication 7, **caractérisé en ce qu'**il comprend une bielle intermédiaire (74) reliant ledit élément coulissant (71) et ledit élément (5) mobile en rotation.

9. Châssis selon l'une quelconque des revendications 7 et 8, **caractérisé en ce que** ledit élément coulissant (71) présente une forme générale de T, dont la barre horizontale porte deux premiers pions (711) autour desquels pivotent respectivement les bras (632, 642) et la barre verticale présente une lumière oblongue (712) dans laquelle se déplace un deuxième pion (622) fixe par rapport à ladite poutre centrale (601).

10. Châssis selon l'une des revendications 1 à 4, **caractérisé en ce que** lesdits moyens de transmission comprennent une biellette (77) dont l'axe longitudinal n'est pas parallèle avec l'axe longitudinal de ladite poutre centrale (601).

11. Châssis selon la revendication 10, **caractérisé en ce que** ladite biellette (77) s'étend entre un desdits bras (632, 642) et une pièce (76) mobile en rotation autour d'un axe perpendiculaire à ladite poutre centrale (601), dont le déplacement est contrôlé par ledit élément (5) mobile en rotation.

12. Châssis selon l'une quelconque des revendications 10 et 11, **caractérisé en ce que** l'axe longitudinal de ladite biellette (77) définit un premier angle (**α**) avec le plan transversal de ladite poutre centrale (601) compris entre 15 et 50°.

13. Châssis selon l'une quelconque des revendications 10 à 12, **caractérisé en ce que** l'axe longitudinal de ladite biellette (77) définit un deuxième angle (**β**) avec le plan longitudinal de ladite poutre centrale (601) compris entre 20 et 65°.

14. Poussette pour enfant **caractérisé en ce qu'**il comprend un châssis pliant selon l'une quelconque des revendications 1 à 13, et au moins un dispositif de transport d'enfant monté sur ladite partie supérieure dudit châssis.

## Patentansprüche

1. Klapprahmen für einen Kinderwagen, umfassend einen oberen Teil, der Aufnahmeeinrichtungen (9) für eine Sitzfläche und Führungseinrichtungen (205) für den Kinderwagen aufweist, und einen unteren Teil (6), der einen Mittelbalken (601) aufweist, der zwei Hinterradträger (63, 64) trägt, die jeweils mit dem Mittelbalken (601) durch eine Einheit aus zwei parallelen Armen (632, 633; 642, 643) verbunden sind, die an dem Mittelbalken angelenkt sind,
**dadurch gekennzeichnet, dass** der obere Teil einen vorderen Bogen (5) und einen hinteren Bogen (4) umfasst, die mit dem Mittelbalken (601) fest verbunden sind und in der zusammengeklappten und der aufgeklappten Stellung des Rahmens im Wesentlichen parallel bleiben, wobei der vorderen Bogen (5) um eine feste Drehachse bezüglich des Mittelbalkens (601) drehbar beweglich ist und auf mindestens einen der Arme (632, 633; 642, 643) jeder Einheit über eine Übertragungsvorrichtung (7) so einwirkt, dass die Radträger dem Mittelbalken (601) genähert werden, um eine zusammengeklappte Stellung einzunehmen, und/oder die Radträger vom Mittelbalken entfernt werden, um eine aufgeklappte Stellung einzunehmen.

2. Rahmen nach Anspruch 1, **dadurch gekennzeichnet, dass** das mindestens eine drehbar bewegliche Element (5) an die Führungseinrichtungen (205) angelenkt ist, wobei die Zusammenklapp- und/oder Aufklappbewegung der letzteren die Drehung des oder der drehbar beweglichen Elemente (5) mit sich bringt.

3. Rahmen nach einem beliebigen der Ansprüche 1 und 2, **dadurch gekennzeichnet, dass** sich die Arme (632, 633; 642, 643) in der aufgeklappten Stellung vom Mittelbalken (601) zur Rückseite des Rahmens und in der zusammengeklappten Stellung vom Mittelbalken (601) zur Vorderseite des Rahmens erstrecken.

4. Rahmen nach einem der Ansprüche 1 bis 3, **dadurch gekennzeichnet, dass** die Übertragungsvorrichtung (7) mindestens ein Hilfselement (72) zum Klappen des Rahmens umfasst und/oder damit zusammenwirkt, das auf das drehbar bewegliche Element (5) und/oder ein bezüglich des Mittelbalkens verschiebbares Element (71) einwirkt.

5. Rahmen nach einem der Ansprüche 1 bis 4, **dadurch gekennzeichnet, dass** mindestens einer der Arme (632, 642), erster Arm genannt, von variabler Länge ist.

6. Rahmen nach Anspruch 5, **dadurch gekennzeichnet, dass** der erste Arm aus zwei Elementen (632a, 632b, 642a, 642b) besteht, die in der Lage sind, bezüglich einander zu gleiten, wobei das Zusammenklappen und/oder Aufklappen des oberen Teils des Rahmens das Gleiten der beiden Elemente bezüglich einander mit sich bringt.

7. Rahmen nach einem der Ansprüche 1 bis 6, **dadurch gekennzeichnet, dass** die Klappvorrichtung (7) ein gleitendes Element (71) umfasst, fest verbunden mit mindestens einem der Elemente (632a, 642a) des ersten Arms (632, 642).

8. Rahmen nach Anspruch 7, **dadurch gekennzeichnet, dass** er eine Zwischenstange (74) umfasst, die das gleitende Element (71) und das drehbar bewegliche Element (5) verbindet.

9. Rahmen nach einem beliebigen der Ansprüche 7 und 8, **dadurch gekennzeichnet, dass** das gleitende Element (71) eine allgemeine T-Form aufweist, deren horizontaler Balken zwei erste Zapfen (711) trägt, um die jeweils die Arme (632, 642) schwenken, und deren vertikaler Balken eine längliche Öffnung (712) aufweist, in der sich ein zweiter, bezüglich des Mittelbalkens (601) fester Zapfen (622) bewegt.

10. Rahmen nach einem der Ansprüche 1 bis 4, **dadurch gekennzeichnet, dass** die Übertragungseinrichtungen eine Koppelstange (77) umfassen, deren Längsachse nicht parallel zur Längsachse des Mittelbalkens (601) liegt.

11. Rahmen nach Anspruch 10, **dadurch gekennzeichnet, dass** sich die Koppelstange (77) zwischen einem der Arme (632, 642) und einem Teil (76) erstreckt, das um eine Achse senkrecht zum Mittelbalken (601) drehbar beweglich ist, und dessen Bewegung durch das drehbar bewegliche Element (5) gesteuert wird.

12. Rahmen nach einem beliebigen der Ansprüche 10 und 11, **dadurch gekennzeichnet, dass** die Längsachse der Koppelstange (77) einen ersten Winkel (α) zur Querebene des Mittelbalkens (601) zwischen 15 und 50° bildet.

13. Rahmen nach einem beliebigen der Ansprüche 10 bis 12, **dadurch gekennzeichnet, dass** die Längsachse der Koppelstange (77) einen zweiten Winkel (β) zur Längsebene des Mittelbalkens (601) zwischen 20 und 65° bildet.

14. Kinderwagen, **dadurch gekennzeichnet, dass** er einen Klapprahmen gemäß einem beliebigen der Ansprüche 1 bis 13 und mindestens eine auf dem oberen Teil des Rahmens montierte Kindertransporteinrichtung umfasst.

## Claims

1. Folding frame for a child's pushchair, comprising an upper portion having means for receiving (9) a seat portion and means for guiding (205) said pushchair and a lower portion (6) having a central beam (601) carrying two rear wheel supports (63, 64), each one connected to said central beam (601) by a set of two parallel arms (632, 633; 642, 643), articulated on said central beam,
**characterised in that** said upper portion comprises two front (5) and rear (4) arches integral with said central beam (601) which remain substantially parallel between them in the folded and unfolded positions of the frame, said front arch (5) being mobile in rotation about an axis of rotation fixed in relation to said central beam (601) and acting on at least one of said arms (632, 633; 642, 643) of each set, via a transmission mechanism (7), in such a way as to bring said wheel supports closer to said central beam (601), in order to take a folded position and/or to separate said wheel supports from said central beam, in order to take an unfolded position.

2. Frame according to claim 1, **characterised in that** said at least one element (5) mobile in rotation is articulated to said means for guiding (205), with the displacement of the folding and/or of the unfolding of the latter driving the rotation of said mobile element or elements (5) in rotation.

3. Frame according to any of claims 1 and 2, **characterised in that** said arms (632, 633, 642, 643) extend from the central beam (601) towards the rear of the frame in unfolded position, and from the central beam (601) towards the front of the frame in folded position.

4. Frame according to one of claims 1 to 3, **characterised in that** the transmission mechanism (7) comprises and/or cooperates with at least one element (72) for assisting with the folding of the frame acting on said element (5) mobile in rotation and/or on a sliding element (71) in relation to said central beam.

5. Frame according to one of claims 1 to 4, **characterised in that** at least one of said arms (632, 642), referred to as the first arm, is of variable length.

6. Frame according to claim 5, **characterised in that** said first arm is constituted of two elements (632a, 632b, 642a, 642b) able to slide in relation to each other, with the folding and/or the unfolding of the upper portion of the frame driving the sliding of the two elements in relation to each other.

7. Frame according to one of claims 1 to 6, **characterised in that** the folding mechanism (7) comprises a sliding element (71) integral with at least one of said elements (632a, 642a) of said first arm (632, 642).

8. Frame according to claim 7, **characterised in that** it comprises an intermediate connecting rod (74) connecting said sliding element (71) and said element (5) mobile in rotation.

9. Frame according to any of claims 7 and 8, **characterised in that** said sliding element (71) has a general shape of a T, of which the horizontal bar carries two first pins (711) about which pivot respectively the arms (632, 642) and the vertical bar has an oblong hole (712) wherein is displaced a second pin (622) fixe in relation to said central beam (601).

10. Frame according to one of claims 1 to 4, **characterised in that** said means of transmission include a connecting rod (77) of which the longitudinal axis is not parallel with the longitudinal axis of said central beam (601).

11. Frame according to claim 10, **characterised in that** said connecting rod (77) extends between one of said arms (632, 642) and a part (76) mobile in rotation about an axis perpendicular to said central beam (601), of which the displacement is controlled by said element (5) mobile in rotation.

12. Frame according to any of claims 10 and 11, **characterised in that** the longitudinal axis of said connecting rod (77) defines a first angle (α) with the transversal plane of said central beam (601) between 15 and 50°.

13. Frame according to any of claims 10 to 12, **characterised in that** the longitudinal axis of said connecting rod (77) defines a second angle (β) with the longitudinal plane of said central beam (601) between 20 and 65°.

14. Child's pushchair **characterised in that** it comprises a folding frame according to any of claims 1 to 13, and at least one device for transporting a child mounted on said upper portion of said frame.
